# EUROPÄISCHE PATENTANMELDUNG

(11) **EP 2 604 906 A2**
(43) Veröffentlichungstag der Anmeldung: **19.06.2013**
(21) Anmeldenummer: 12006696.4
(22) Anmeldetag: 25.09.2012
(51) Int. Cl.: F16L 59/153, F16L 11/22

(54) **Schlauchsystem mit einem ersten Schlauch und einem zweiten, entlang dem ersten Schlauch in einem Kanal verlaufenden zweiten Schlauch**

(30) Priorität: 14.12.2011 DE 202011109030 U
(71) Anmelder: SHP Primaflex GmbH, 23626 Ratekau (DE)
(72) Erfinder: Tetzlaff, Thomas, 23626 Ratekau (DE); Keith, Gordon, 23626 Ratekau (DE)
(74) Vertreter: Werner, Richard

(57) **Zusammenfassung**

Schlauchsystem mit einem ersten Schlauch (10), einem zweiten Schlauch (12) und einem Materialstreifen (14), der zwei Randabschnitte (18) und einen mittleren Abschnitt (20) aufweist, die sich in Längsrichtung des Materialstreifens (14) erstrecken, wobei die beiden Randabschnitte (18) mit dem ersten Schlauch (10) verbunden sind, so dass der mittlere Abschnitt (20) einen entlang dem ersten Schlauch (10) verlaufenden Kanal bildet, in dem der zweite Schlauch (12) angeordnet ist, wobei der Materialstreifen (14) eine Trägerschicht (26) und eine Wärmeisolationsschicht (28) aufweist.

## Beschreibung

Die Erfindung betrifft ein Schlauchsystem mit einem ersten Schlauch, einem zweiten Schlauch und einem Materialstreifen, der zwei Randabschnitte und einen mittleren Abschnitt aufweist, die sich in Längsrichtung des Materialstreifens erstrecken, wobei die beiden Randabschnitte mit dem ersten Schlauch verbunden sind, so dass der mittlere Abschnitt einen entlang dem ersten Schlauch verlaufenden Kanal bildet, in dem der zweite Schlauch angeordnet ist. Derartige Schlauchsysteme können immer dann mit Vorteil eingesetzt werden, wenn zwei unterschiedliche Medien über eine gemeinsame Strecke geführt werden sollen. Durch die Anordnung des zweiten Schlauchs in dem Kanal können beide Schläuche gemeinsam einfach gehandhabt werden. Außerdem bietet der Kanal einen gewissen Schutz für den zweiten Schlauch und die gesamte Anordnung kann bei Verwendung geeigneter Materialien relativ flexibel ausgebildet sein. Ein beispielhaftes Anwendungsfeld für derartige Schlauchsysteme sind Dampfreinigungsmaschinen, bei denen über den zweiten Schlauch Wasserdampf zu einem Dampfreinigungskopf geleitet wird. Über den ersten Schlauch kann der gelöste Schmutz vom Reinigungskopf abgesaugt werden.

Beim Transport heißer Medien in dem zweiten Schlauch, wie beispielsweise von heißem Wasserdampf, kann die Handhabung des Schlauchsystems für einen Benutzer unangenehm werden, weil sich die Oberfläche des Schlauchsystems durch das heiße Medium erhitzen kann. Unter Umständen kann es sogar zu Verbrennungen kommen.

Davon ausgehend ist es die Aufgabe der Erfindung, ein Schlauchsystem der eingangs genannten Art zur Verfügung zu stellen, das eine einfache und sichere Handhabung auch bei Verwendung heißer Medien ermöglicht und zudem einfach und wirtschaftlich herstellbar ist.

Diese Aufgabe wird gelöst durch das Schlauchsystem mit den Merkmalen des Anspruchs 1. Vorteilhafte Ausgestaltungen sind in den sich anschließenden Unteransprüchen angegeben.

Das Schlauchsystem hat einen ersten Schlauch, einen zweiten Schlauch und einen Materialstreifen, der zwei Randabschnitte und einen mittleren Abschnitt aufweist, die sich in Längsrichtung des Materialstreifens erstrecken, wobei die beiden Randabschnitte mit dem ersten Schlauch verbunden sind, so dass der mittlere Abschnitt einen entlang dem ersten Schlauch verlaufenden Kanal bildet, in dem der zweite Schlauch angeordnet ist, wobei der Materialstreifen eine Trägerschicht und eine Wärmeisolationsschicht aufweist.

Durch die Anordnung des zweiten Schlauchs in dem von dem Materialstreifen gebildeten Kanal bilden der erste und der zweite Schlauch eine Einheit, die einfach handhabbar ist. Dabei ist der zweite Schlauch, der vorzugsweise zur Führung eines heißen Mediums bestimmt ist, nach außen hin von dem Materialstreifen umgeben, genauer von dessen mittlerem Abschnitt. Dadurch ist er einerseits vor Beschädigungen von außen geschützt. Weil der Materialstreifen eine Trägerschicht und eine Wärmeisolationsschicht aufweist, wird zudem wirksam verhindert, dass die Wärme aus dem zweiten Schlauch nach außen dringt. Wegen der Wärmeisolationsschicht des Materialstreifens kann die Außenseite des gesamten Schlauchsystems in der Regel gefahrlos berührt werden.

Dass der Materialstreifen eine Trägerschicht und eine Wärmeisolationsschicht aufweist bedeutet, dass er mindestens zwei Lagen aufweist, die ihrer Funktion nach unterschieden werden können. Die Trägerschicht sorgt für eine ausreichende mechanische Festigkeit des Materialstreifens, damit der zweite Schlauch innerhalb des von dem Materialstreifen gebildeten Kanals sicher gehalten ist. Die Wärmeisolationsschicht hat eine wärmeisolierende Wirkung. Die Wärmeisolationsschicht ist bevorzugt an der dem zweiten Schlauch zugewandten Seite des mittleren Abschnitts ausgebildet, d.h. an der Innenseite des Kanals. Die Trägerschicht kann an einer Außenseite des Schlauchsystems angeordnet sein.

Grundsätzlich können für die beiden Schichten unterschiedliche Materialien verwendet werden, die beispielsweise miteinander verklebt oder auf sonstige Art und Weise verbunden sind. Wie nachfolgend noch im Einzelnen erläutert wird, können die beiden Schichten unter Umständen aus demselben Material und/oder der gesamte Materialstreifen kann einteilig gefertigt sein.

In einer Ausgestaltung ist die Dicke des Materialstreifens im mittleren Abschnitt größer als in den beiden Randabschnitten. Beispielsweise kann die Dicke des Materialstreifens im mittleren Abschnitt 50 % größer sein als in den Randabschnitten, oder doppelt so groß oder mehr. Durch einen besonders dicken Materialstreifen wird eine gute Wärmeisolationswirkung erzielt.

In einer Ausgestaltung erstreckt sich die Trägerschicht über die gesamte Breite des Materialstreifens. Dadurch kann der mittlere Abschnitt des Materialstreifens mit Hilfe der Randabschnitte dauerhaft fest mit dem ersten Schlauch verbunden werden.

In einer Ausgestaltung erstreckt sich die Wärmeisolationsschicht ausschließlich über den mittleren Abschnitt des Materialstreifens. Diese Anordnung ist einerseits besonders materialsparend, weil die Wärmeisolationsschicht nur dort ausgebildet ist, wo sie zur thermischen Abschirmung des zweiten Schlauchs erforderlich ist. Andererseits ergeben sich Vorteile bei der Verbindung der Randabschnitte des Materialstreifens mit dem ersten Schlauch, weil diese Verbindung nicht durch eine Wärmeisolationsschicht im Bereich der Randabschnitte beeinträchtigt wird. Insbesondere können die Randabschnitte des Materialstreifens im Wesentlichen ausschließlich aus der Trägerschicht bestehen, so dass die Trägerschicht unmittelbar mit dem ersten Schlauch verbunden werden kann.

In einer Ausgestaltung bestehen die Trägerschicht und die Wärmeisolationsschicht aus demselben Material. Dies ermöglicht einen besonders einfachen und wirtschaftlichen Aufbau. Außerdem kann durch diese materialeinheitliche und/oder einteilige Fertigung der Trägerschicht und der Wärmeisolationsschicht eine Ablösung der Wärmeisolationsschicht von der Trägerschicht vermieden werden, so dass eine dauerhafte thermische Abschirmung des zweiten Schlauchs erzielt wird.

In einer Ausgestaltung ist die Wärmeisolationsschicht von Verdickungen des Materialstreifens gebildet. Diese, die Wärmeisolationsschicht bildenden Verdickungen sorgen dafür, dass der zweite Schlauch stets in einem Abstand von der Trägerschicht des Materialstreifens angeordnet ist. Dadurch wird ein direkter thermischer Kontakt zwischen der Trägerschicht und dem zweiten Schlauch verhindert. Die Verdickungen selbst haben außerdem eine wärmeisolierende Wirkung.

In einer Ausgestaltung sind zwischen den Verdickungen luftgefüllte Freiräume ausgebildet. Diese luftgefüllten Freiräume können der Wärmeisolationsschicht zugerechnet werden. Wegen der geringen Wärmeleitfähigkeit von Luft wird die thermische Abschirmung wesentlich verbessert.

In einer Ausgestaltung entspricht die Höhe der Verdickungen 50 % bis 150 % der Dicke der Trägerschicht. Versuche haben ergeben, dass sich bei Verdickungen dieser Größenordnung eine ausreichende wärmeisolierende Wirkung ergibt, ohne die Flexibilität des Schlauchsystems zu stark einzuschränken.

In einer Ausgestaltung sind die Verdickungen in Längsrichtung des Materialstreifens verlaufende Rippen. Eine rippenförmige Ausbildung der Verdickungen in der genannten Anordnung hat den Vorteil, dass der Materialstreifen besonders flexibel ist und zwecks Ausbildung des Kanals gegebenenfalls in relativ kleinen Radien um den zweiten Schlauch herum gekrümmt angeordnet werden kann. Außerdem ist ein Materialstreifen mit in Längsrichtung verlaufenden Rippen einfach herzustellen, beispielsweise in einem Extrusionsverfahren. Bei Verwendung eines derartigen Materialstreifens weist das Schlauchsystem insgesamt überdies eine hohe Flexibilität auf.

In einer Ausgestaltung weisen die Rippen im Querschnitt einen halbkreisförmigen Abschnitt auf. Die Rippen können auch insgesamt im Querschnitt halbkreisförmig ausgebildet sein. Der Durchmesser des Halbkreises des halbkreisförmigen Abschnitts kann der Trägerschicht zugewandt sein. Die abgerundeten, von den im Querschnitt halbkreisförmigen Seiten der Rippen gebildeten Flächen können dem zweiten Schlauch zugewandt sein. Halbkreisförmig abgerundete Rippen weisen besonders günstige Verschleißeigenschaften auf. Außerdem werden mechanische Belastungen des zweiten Schlauchs auch bei starker Biegung oder sonstiger Beanspruchung des Schlauchsystems gering gehalten.

In einer Ausgestaltung sind die Rippen in einem Abstand voneinander angeordnet, der im Bereich von 50 % bis 150 % der Breite der Rippen liegt. Insbesondere kann der Abstand zwischen den Rippen etwa der Breite der Rippen entsprechen. Durch die bei dieser Anordnung zwischen den Rippen ausgebildeten Freiräume, die mit Luft gefüllt sind, ergeben sich besonders vorteilhafte Wärmeisolationseigenschaften bei gleichzeitig sicherer Aufnahme des zweiten Schlauchs innerhalb des Kanals.

In einer Ausgestaltung ist der erste Schlauch ein Saugschlauch. Dadurch kann das Schlauchsystem in Verbindung mit einem Unterdruck im ersten Schlauch eingesetzt werden, etwa für die eingangs genannte Anwendung in einer Dampfreinigungsmaschine.

In einer Ausgestaltung weist der erste Schlauch eine Verstärkungsspirale und/oder Verstärkungsfäden und/oder ein Verstärkungsgewebe auf. Beispielsweise kann an einer Außenseite des ersten Schlauchs ein Federstahldraht oder ein Kunststoffstrang spiralförmig befestigt sein. Verstärkungsfäden aus unterschiedlichen Materialien können ebenfalls spiralförmig oder auch in Längsrichtung und/oder in Umfangsrichtung des Schlauchs mit dem Schlauch verbunden und/oder in den Schlauch eingearbeitet werden. Auch die Verwendung eines Verstärkungsgewebes an einer Innenseite oder Außenseite des ersten Schlauchs kann je nach Anwendungsfall eine sinnvolle Verstärkungsmaßnahme für den ersten Schlauch sein.

In einer Ausgestaltung ist der zweite Schlauch ein Dampfschlauch. Dadurch kann das Schlauchsystem insbesondere in Verbindung mit einer Dampfreinigungsmaschine eingesetzt werden.

In einer Ausgestaltung weist der zweite Schlauch eine Temperaturbeständigkeit bis 100 °C oder mehr auf. Auch in diesem Fall ist das Schlauchsystem zur Verwendung mit entsprechend heißen Medien im zweiten Schlauch geeignet.

In einer Ausgestaltung sind die beiden Randabschnitte mit dem ersten Schlauch verklebt oder verschweißt. Grundsätzlich können die Randabschnitte des Materialstreifens auf beliebige Art und Weise mit dem ersten Schlauch verbunden werden. Durch Verkleben oder Verschweißen kann auf einfache Weise eine dauerhafte Verbindung mit ausreichender Festigkeit erzielt werden.

In einer Ausgestaltung besteht die Trägerschicht und/oder die Wärmeisolationsschicht aus Kunststoff. Geeignete Kunststoffe kombinieren eine ausreichende Flexibilität mit hoher Festigkeit und Temperaturbeständigkeit. In Betracht kommen insbesondere thermoplastische Elastomere (TPE) oder Polyvinylchlorid (PVC).

In einer Ausgestaltung beträgt der Außendurchmesser des zweiten Schlauchs 50 % oder weniger des Außendurchmessers des ersten Schlauchs. Beispielsweise kann der Außendurchmesser des zweiten Schlauchs 40 % oder weniger, 30 % oder weniger oder 20 % oder weniger des Außendurchmessers des ersten Schlauchs betragen. Bei den genannten Größenverhältnissen ist die Befestigung des zweiten Schlauchs an dem ersten Schlauch mit Hilfe eines erfindungsgemäßen Materialstreifens besonders vorteilhaft.

In einer Ausgestaltung sind die beiden Randabschnitte in einem Abstand voneinander mit dem ersten Schlauch verbunden. Der Kanal, in dem der zweite Schlauch angeordnet ist, wird somit nach außen hin von dem mittleren Abschnitt des Materialstreifens begrenzt, nach innen von einem Umfangsabschnitt des ersten Schlauchs. Grundsätzlich können die beiden Randabschnitte auch unmittelbar aneinander angrenzend an dem ersten Schlauch befestigt werden, so dass der mittlere Abschnitt und/oder die Wärmeisolationsschicht den zweiten Schlauch vollständig umgibt. Die Wärmeisolation des zweiten Schlauchs gegenüber dem ersten Schlauch spielt jedoch eine untergeordnete Rolle, so dass bei einer nur teilweisen Umschließung des zweiten Schlauchs von dem mittleren Abstand eine zugleich besonders materialsparende und kompakte Anordnung erzielt wird.

In einer Ausgestaltung ist der Abstand zwischen den beiden Randabschnitten größer als der Außendurchmesser des zweiten Schlauchs. Bei dieser Anordnung wird eine gewisse Beweglichkeit des zweiten Schlauchs innerhalb des Kanals erzielt, was die Flexibilität des Schlauchsystems insgesamt erhöhen kann.

In einer Ausgestaltung ist in dem Kanal mindestens eine elektrische Leitung angeordnet. Auf diese Weise können elektrische Energie und/oder elektrische Signale mit Hilfe des Schlauchsystems übertragen werden, wobei die mindestens eine elektrische Leitung ebenso wie der zweite Schlauch von dem Materialstreifen geschützt ist und die gesamte Anordnung unverändert einfach handhabbar bleibt.

Die Erfindung wird nachfolgend anhand von in Figuren gezeigten Ausführungsbeispielen näher erläutert. Es zeigen:
- Fig. 1: ein erfindungsgemäßes Schlauchsystem in einer Draufsicht von der Seite,
- Fig. 2: einen Querschnitt durch das Schlauchsystem aus Fig. 1 entlang der mit A-A bezeichneten Schnittebene,
- Fig. 3: den Materialstreifen des Schlauchsystems aus Fig. 1 vor der Verbindung mit dem ersten Schlauch in einer perspektivischen Ansicht,
- Fig. 4: den Materialstreifen aus Fig. 3 im Querschnitt,
- Fig. 5: den Materialstreifen aus den Figuren 3 und 4 in mit dem ersten Schlauch verbundenem Zustand ohne den zweiten Schlauch,
- Fig. 6: einen Ausschnitt eines weiteren erfindungsgemäßen Schlauchsystems im Querschnitt.

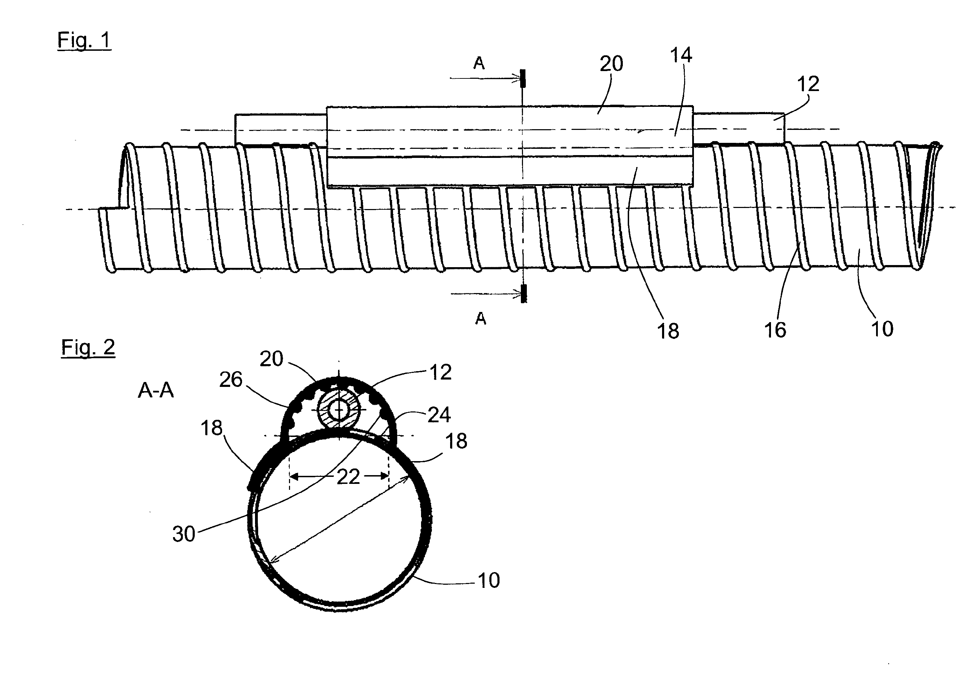

Fig. 1 zeigt ein erfindungsgemäßes Schlauchsystem mit einem ersten Schlauch 10, einem zweiten Schlauch 12 und einem Materialstreifen 14. Der zweite Schlauch 12 und der Materialstreifen 14 erstrecken sich in der Praxis über die gesamte Länge des ersten Schlauchs 10 und sind in der Fig. 1 lediglich zu Zwecken der besseren Darstellung verkürzt dargestellt, um die relative Anordnung der Elemente zu verdeutlichen.

Der erste Schlauch 10 weist eine an seiner Außenseite befestigte Verstärkungsspirale 16 aus einem Federstahldraht auf. Der zweite Schlauch 12 verläuft in Längsrichtung des ersten Schlauchs 10. Er liegt an dem ersten Schlauch 10 an.

Der Materialstreifen 14 weist zwei Randabschnitte 18 auf, von denen in der Fig. 1 nur der dem Betrachter zugewandte Randabschnitt 18 sichtbar ist. Zwischen den beiden Randabschnitten 18 befindet sich ein mittlerer Abschnitt 20 des Materialstreifens 14. Dieser bildet einen Kanal, in dem der zweite Schlauch 12 angeordnet ist. Die beiden Randabschnitte 18 und der mittlere Abschnitt 20 erstrecken sich in Längsrichtung des Materialstreifens 14. Diese Längsrichtung stimmt mit der Längsrichtung des ersten Schlauchs 10 und mit der Längsrichtung des zweiten Schlauchs 12 überein.

Weitere Einzelheiten der Anordnung aus Fig. 1 sind besser in der Querschnittsdarstellung der Fig. 2 erkennbar. Fig. 2 zeigt, dass der erste Schlauch 10 im Querschnitt kreisförmig ist und einen größeren Durchmesser aufweist, als der im Querschnitt ebenfalls kreisförmige zweite Schlauch 12. Der Außendurchmesser des zweiten Schlauchs 12 beträgt etwa 25 % des Außendurchmessers des ersten Schlauchs 10. Außerdem zeigt Fig. 2 weitere Einzelheiten des Materialstreifens 14. Erkennbar ist, dass die Randabschnitte 18 jeweils mit einer Unterseite flächig an der Außenseite des ersten Schlauchs anliegen und mit dem ersten Schlauch 10 verbunden sind. Zwischen den beiden Randabschnitten 18 befindet sich ein Abstand 22, der größer ist als die Breite jedes Randabschnitts 18 und etwa das Doppelte des Außendurchmessers des zweiten Schlauchs 12 beträgt.

Der von dem mittleren Abschnitt 20 gebildete Kanal, der nach unten von einem Umfangsabschnitt 24 des ersten Schlauchs 10 begrenzt wird, ist im Querschnitt mondsichelförmig. Der zweite Schlauch 12 ist in diesem Kanal angeordnet und liegt mit seiner in der Fig. 2 unten befindlichen Seite an dem Umfangsabschnitt 24 des ersten Schlauchs 10 an.

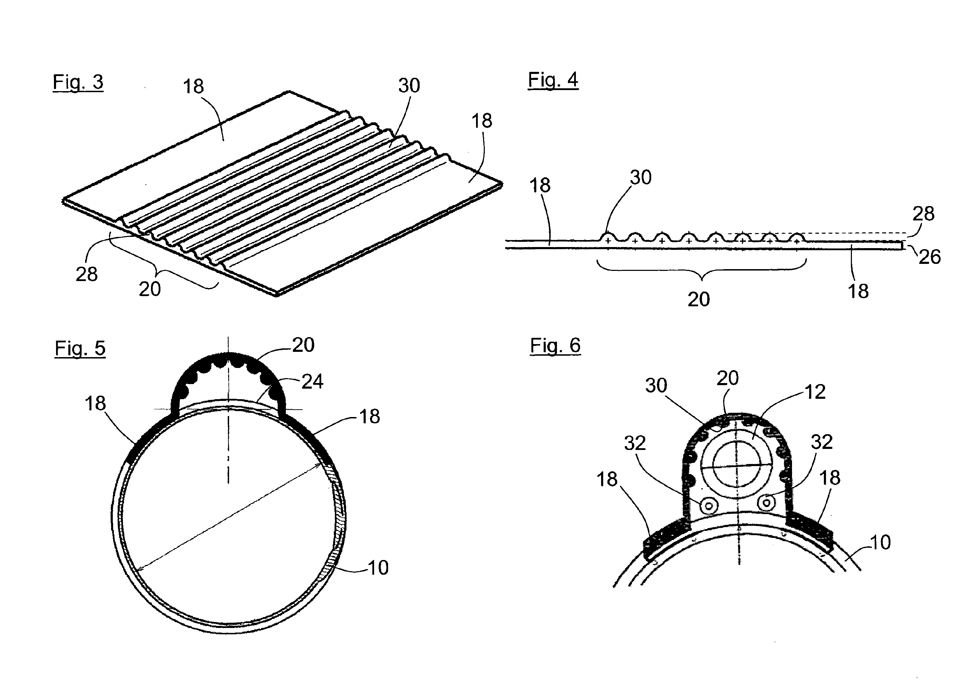

Ebenfalls in der Fig. 2 zu sehen ist, dass der Materialstreifen 14 eine sich über seine gesamte Breite erstreckende Trägerschicht 26 aufweist. Außerdem hat der Materialstreifen 14 eine Wärmeisolationsschicht 28 (siehe Fig. 4), die von Verdickungen des Materialstreifens 14 und luftgefüllten, zwischen den Verdickungen befindlichen Freiräumen gebildet ist. Die Verdickungen sind im gezeigten Ausführungsbeispiel in Längsrichtung des mittleren Abschnitts 20 an dessen dem zweiten Schlauch 12 zugewandter Seite angeordnete Rippen 30. Die Rippen 30 sind im Querschnitt halbkreisförmig. Das Ausführungsbeispiel zeigt acht parallel zueinander angeordnete Rippen 30. Durch die Rippen 30 befindet sich die Außenseite des zweiten Schlauchs 12 stets in einem Abstand von der Trägerschicht 26 des Materialstreifens 14.

Fig. 3 zeigt den Materialstreifen 14 in einem flachen, noch nicht mit dem ersten Schlauch 10 verbundenen Zustand. In der Figur oben dargestellt ist die später dem ersten Schlauch 10 zugewandte Seite des Materialstreifens 14. Der Materialstreifen 14 weist zwei Randabschnitte 18 mit glatten Oberflächen auf. Diese Randabschnitte 18 werden ausschließlich von der Trägerschicht 26 des Materialstreifens 14 gebildet. Im mittleren Abschnitt 20 des Materialstreifens 14 ist außerdem eine Wärmeisolationsschicht 28 ausgebildet, die die acht nebeneinander angeordneten Rippen 30 aufweist.

Die Unterteilung des aus einem einheitlichen Kunststoffmaterial einteilig gefertigten Materialstreifens 14 in eine Trägerschicht 16 und eine Wärmeisolationsschicht 28 ist im Querschnitt der Fig. 4 nochmals verdeutlicht. Der Materialstreifen 14 besteht aus einer über seine gesamte Breite erstreckten Trägerschicht 26 und einer ausschließlich im mittleren Abschnitt 20 angeordneten, von den in Längsrichtung des Materialstreifens verlaufenden Rippen gebildeten Wärmeisolationsschicht 28. Ebenfalls erkennbar ist, dass sich die Rippen 30 in einem Abstand voneinander befinden. Diese Abstände zwischen den Rippen definieren luftgefüllte Freiräume. Die Breite des Abstands zwischen den Rippen 30 entspricht etwa der Breite einer einzelnen Rippe 30. Die Höhe der Rippen 30 entspricht etwa der Dicke der Trägerschicht 26. Somit weist der Materialstreifen 14 insgesamt in seinem mittleren Abschnitt 20 etwa die doppelte Dicke auf wie in seinen Randabschnitten 18.

Fig. 5 verdeutlicht in einer im Wesentlichen der Fig. 2 entsprechenden Ansicht die Verbindung der Randabschnitte 18 mit dem ersten Schlauch 10 und zeigt den mondsichelförmigen Kanal, in dem der zweite Schlauch 12 anzuordnen ist. Der Kanal wird nach oben von dem etwa halbkreisförmig gebogenem mittleren Abschnitt 20 des Materialstreifens 14 begrenzt, nach unten von dem Umfangsabschnitt 24 des ersten Schlauchs 10.

In der Fig. 6 befinden sich in dem Kanal zusätzlich zu dem zweiten Schlauch 12 zwei elektrische Leitungen 32, die in einem Abstand voneinander unterhalb des zweiten Schlauchs 12 angeordnet sind.

## Patentansprüche

1. Schlauchsystem mit einem ersten Schlauch (10), einem zweiten Schlauch (12) und einem Materialstreifen (14), der zwei Randabschnitte (18) und einen mittleren Abschnitt (20) aufweist, die sich in Längsrichtung des Materialstreifens (14) erstrecken, wobei die beiden Randabschnitte (18) mit dem ersten Schlauch (10) verbunden sind, so dass der mittlere Abschnitt (20) einen entlang dem ersten Schlauch (10) verlaufenden Kanal bildet, in dem der zweite Schlauch (12) angeordnet ist, **dadurch gekennzeichnet, dass** der Materialstreifen (14) eine Trägerschicht (26) und eine Wärmeisolationsschicht (28) aufweist.

2. Schlauchsystem nach Anspruch 1, **dadurch gekennzeichnet, dass** die Dicke des Materialstreifens (14) im mittleren Abschnitt (20) größer ist als in den beiden Randabschnitten (18).

3. Schlauchsystem nach Anspruch 1 oder 2, **dadurch gekennzeichnet, dass** sich die Trägerschicht (26) über die gesamte Breite des Materialstreifens (14) erstreckt.

4. Schlauchsystem nach einem der Ansprüche 1 bis 3, **dadurch gekennzeichnet, dass** sich die Wärmeisolationsschicht (28) ausschließlich über den mittleren Abschnitt (20) des Materialstreifens (14) erstreckt.

5. Schlauchsystem nach einem der Ansprüche 1 bis 4, **dadurch gekennzeichnet, dass** die Trägerschicht (26) und die Wärmeisolationsschicht (28) aus demselben Material bestehen.

6. Schlauchsystem nach einem der Ansprüche 1 bis 5, **dadurch gekennzeichnet, dass** die Wärmeisolationsschicht (28) von Verdickungen des Materialstreifens (14) gebildet ist, wobei optional zwischen den Verdickungen luftgefüllte Freiräume ausgebildet sind.

7. Schlauchsystem nach Anspruch 6, **dadurch gekennzeichnet, dass** die Höhe der Verdickungen 50 % bis 150 % der Dicke der Trägerschicht (26) entspricht und/oder die Verdickungen in Längsrichtung des Materialstreifens (14) verlaufende Rippen (30) sind.

8. Schlauchsystem nach Anspruch 7, **dadurch gekennzeichnet, dass** die Rippen (30) im Querschnitt einen halbkreisförmigen Abschnitt aufweisen und/oder in einem Abstand voneinander angeordnet sind, der im Bereich von 50 % bis 150 % der Breite der Rippen liegt.

9. Schlauchsystem nach einem der Ansprüche 1 bis 8, **dadurch gekennzeichnet, dass** der erste Schlauch (10) ein Saugschlauch ist und/oder eine Verstärkungsspirale (16) und/oder Verstärkungsfäden und/oder ein Verstärkungsgewebe aufweist.

10. Schlauchsystem nach einem der Ansprüche 1 bis 9, **dadurch gekennzeichnet, dass** der zweite Schlauch (12) ein Dampfschlauch ist und/oder eine Temperaturbeständigkeit bis 100 °C oder mehr aufweist.

11. Schlauchsystem nach einem der Ansprüche 1 bis 10, **dadurch gekennzeichnet, dass** die beiden Randabschnitte (18) mit dem ersten Schlauch (10) verklebt oder verschweißt sind.

12. Schlauchsystem nach einem der Ansprüche 1 bis 11, **dadurch gekennzeichnet, dass** die Trägerschicht (26) und/oder die Wärmeisolationsschicht (28) aus Kunststoff besteht.

13. Schlauchsystem nach einem der Ansprüche 1 bis 12, **dadurch gekennzeichnet, dass** der Außendurchmesser des zweiten Schlauch (12) 50 % oder weniger des Außendurchmessers des ersten Schlauchs (10) beträgt.

14. Schlauchsystem nach einem der Ansprüche 1 bis 13, **dadurch gekennzeichnet, dass** die beiden Randabschnitte (18) in einem Abstand (22) voneinander mit dem ersten Schlauch (10) verbunden sind, wobei optional der Abstand (22) zwischen den beiden Randabschnitten (18) größer ist als der Außendurchmesser des zweiten Schlauchs (12).

15. Schlauchsystem nach einem der Ansprüche 1 bis 14, **dadurch gekennzeichnet, dass** in dem Kanal mindestens eine elektrische Leitung (32) angeordnet ist.
